# EUROPÄISCHE PATENTSCHRIFT

(11) **EP 1 000 983 B1**
(45) Veröffentlichungstag und Bekanntmachung des Hinweises auf die Patenterteilung: **22.10.2003**
(21) Anmeldenummer: 99121807.4
(22) Anmeldetag: 04.11.1999
(51) Int. Cl.: C09B 67/22

(54) **Farbstoffmischung, Verfahren zu ihrer Herstellung und ihre Verwendung**
Dye mixture, process for its preparation and its use
Mélange colorant, son procédé de préparation et son utilisation

(30) Priorität: 11.11.1998 DE 19852051
(43) Veröffentlichungstag der Anmeldung: 17.05.2000
(73) Patentinhaber: DyStar Textilfarben GmbH & Co. Deutschland KG, 65926 Frankfurt am Main (DE)
(72) Erfinder: Schumacher, Christian, Dr., 65779 Kelkheim (DE); Gröbel, Bengt-Thomas, Dr., 65529 Waldems (DE); Schaffeld, Mieke, 65520 Bad Camberg (DE); Krieger, Karl, 65510 Hünstetten (DE); Röhrig, Dierk, Jl.Jen. Gatot Subroto, Jakarta 12040 (ID)

(56) Entgegenhaltungen:
- EP-A- 0 177 449
- EP-A- 0 668 328
- EP-A- 0 719 841
- DE-A- 4 039 406

## Beschreibung

Die Erfindung liegt auf dem technischen Gebiet der faserreaktiven Azofarbstoffe. Farbstoffe, die den später angegebenen und definierten allgemeinen Formeln (1) und (2) entsprechen, besitzen gewisse anwendungstechnische Mängel, wie beispielsweise eine zu große Abhängigkeit der Farbausbeute von wechselnden Färbeparametern im Färbeprozeß, eine unzureichende Löslichkeit im wäßrigen Färbebad in höheren Farbstoffkonzentrationen in Gegenwart von Elektrolytsalzen oder einen ungenügenden Farbaufbau auf Baumwolle und insbesondere Viskose (ein guter Farbaufbau ergibt sich aus der Fähigkeit eines Farbstoffes, bei Anwendung erhöhter Farbstoffkonzentrationen im Färbebad die entsprechend farbstärkere Färbung zu liefern). Folge dieser Mängel können schlechte Reproduzierbarkeiten der erhältlichen Färbungen sein. Es ist jedoch insbesondere wichtig, Färbungen mit guter Farbausbeute zu erhalten, d.h. Färbungen, deren Farbtiefe im Verhältnis zur eingesetzten Farbstoffmenge, beispielsweise im Vergleich zu anderen Farbstoffen, aufgrund der Farbeigenschaft des Farbstoffes selbst (hoher Extinktionswert) und aufgrund des färberischen Verhaltens dieses Farbstoffes, wie gutes Ausziehvermögen und hoher Fixierwert, möglichst hoch ist. Setzt man Mischungen von Farbstoffen bestimmter Farbausbeute ein, so ist es die Regel, daß sich die Farbausbeute dieser Mischung von Farbstoffen aus der Summe der Farbausbeuten der Einzelfarbstoffe ergibt, weswegen die Farbausbeute einer Mischung von beispielsweise zwei Farbstoffen geringer sein wird als die Farbausbeute, die sich durch den Farbstoff mit der größeren Farbausbeute-Eigenschaft bei dessen Einsatz als Einzelfarbstoff, jedoch in der Gesamtmenge der beiden Einzelfarbstoffe, ergibt. Andere Farbstoffmischungen von wasserlöslichen Azofarbstoffen mit synergistischen Eigenschaften sind bereits aus EP O 719 841 bekannt.

Mit der vorliegenden Erfindung wurden nunmehr Farbstoffmischungen von Azofarbstoffen entsprechend den nachstehend definierten allgemeinen Formeln (1) und (2) 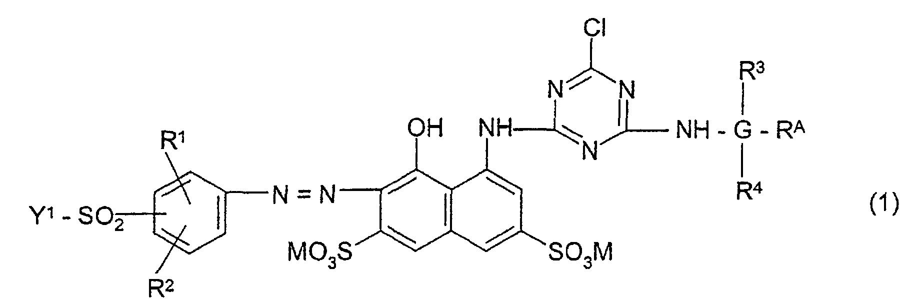 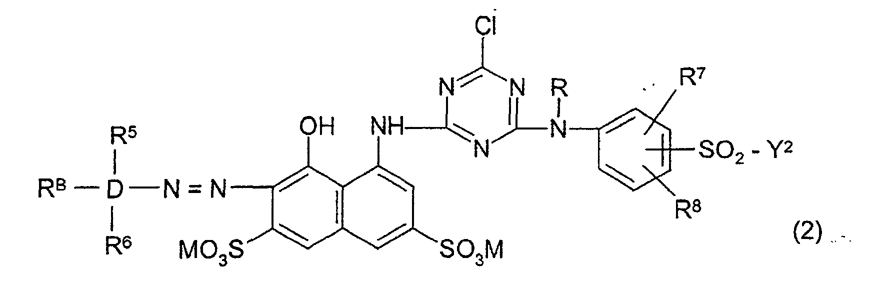 gefunden, deren Farbstärke überraschenderweise höher liegt als die Summe der Farbstärken, die die Einzelfarbstoffe der Farbstoffmischung liefern. Dieser synergistische Effekt zeigt sich zudem in einem verbesserten Aufbauverhalten der erfindungsgemäßen Mischung gegenüber einzelnen Farbstoffen, die in der Mischung enthalten sind, beim Färben von hydroxy- und carbonamidgruppenhaltigen Fasermaterialien, wie beispielsweise Cellulosefasermaterialien, wie Baumwolle, und insbesondere bei Viskosefasermaterialien.

Die Erfindung betrifft somit Farbstoffmischungen, die einen oder mehrere, wie zwei oder drei, bevorzugt 1 oder 2, Farbstoffe der allgemeinen Formel (1) und einen oder mehrere, wie zwei oder drei, bevorzugt 1 oder 2, Farbstoffe der allgemeinen Formel (2) in einem molaren Verhältnisse des oder der Farbstoffe (1) und des oder der Farbstoffe (2) von 70 : 30 bis 30 : 70, vorzugsweise von 60 : 40 bis 40 : 60, enthalten.

In diesen Formeln bedeuten:
- M: ist Wasserstoff, ein Alkalimetall, wie Natrium, Kalium oder Lithium, oder das Äquivalent eines Erdalkalimetalls, wie des Calciums, bevorzugt Wasserstoff und insbesondere Natrium, Kalium oder Lithium;
- R¹: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Sulfo oder Carboxy, bevorzugt Wasserstoff, Methyl und Methoxy und insbesondere bevorzugt Wasserstoff;
- R²: ist Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy, bevorzugt Wasserstoff, Methyl und Methoxy und insbesondere bevorzugt Wasserstoff;
- G: ist der Rest des Benzols oder Naphthalins;
- R³: ist im Falle, daß G für den Rest des Benzols steht, Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Brom und Chlor, Sulfo oder Carboxy, bevorzugt Wasserstoff, Methyl, Methoxy und Sulfo, insbesondere bevorzugt Sulfo, und ist Wasserstoff, Methyl, Sulfo oder Carboxy, bevorzugt Sulfo, falls G für den Rest des Naphthalins steht;
- R⁴: ist im Falle, daß G für den Rest des Benzols steht, Wasserstoff, Alkyl von 1 bis 4 C-Atomen, wie Ethyl und insbesondere Methyl, Alkoxy von 1 bis 4 C-Atomen, wie Ethoxy und insbesondere Methoxy, oder Sulfo, bevorzugt Wasserstoff, Methyl, Methoxy und Sulfo, insbesondere bevorzugt Wasserstoff und Sulfo, und ist Wasserstoff oder Sulfo im Falle, daß G den Rest des Naphthalins bedeutet;
- R^{A}: ist Wasserstoff oder Sulfo, bevorzugt Wasserstoff;
- D: ist der Rest des Benzols oder Naphthalins;
- R⁵: ist im Falle, daß D für den Rest des Benzols steht, Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Brom und Chlor, Sulfo oder Carboxy, bevorzugt Wasserstoff, Methyl, Methoxy und Sulfo, insbesondere bevorzugt Sulfo, und ist Wasserstoff, Methyl, Sulfo oder Carboxy, bevorzugt Sulfo, falls D für den Rest des Naphthalins steht;
- R⁶: ist im Falle, daß D für den Rest des Benzols steht Wasserstoff, Alkyl von 1 bis 4 C-Atomen, wie Ethyl und insbesondere Methyl, Alkoxy von 1 bis 4 C-Atomen, wie Ethoxy und insbesondere Methoxy, oder Sulfo, bevorzugt Wasserstoff, Methyl, Methoxy und Sulfo, insbesondere bevorzugt Wasserstoff und Sulfo, und ist Wasserstoff oder Sulfo im Falle, daß D den Rest des Naphthalins bedeutet;
- R^{B}: ist Wasserstoff oder Sulfo, bevorzugt Wasserstoff;
- R⁷: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Sulfo oder Carboxy, bevorzugt Wasserstoff, Methyl und Methoxy und insbesondere bevorzugt Wasserstoff;
- R⁸: ist Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy, bevorzugt Wasserstoff, Methyl und Methoxy und insbesondere bevorzugt Wasserstoff;
- R: ist Wasserstoff oder Alkyl von 1 bis 4 C-Atomen, wie Methyl oder Ethyl, bevorzugt Wasserstoff;
- Y¹: ist Vinyl oder ist Ethyl, das in β-Stellung durch einen alkalisch eliminierbaren Substituenten substituiert ist, wie beispielsweise durch Chlor, Sulfato, Thiosulfato, Phosphato, Alkanoyloxy von 2 bis 5 C-Atomen, wie Acetyloxy, und Sulfobenzoyloxy, und ist bevorzugt Vinyl, β-Chlorethyl und β-Sulfatoethyl und insbesondere bevorzugt Vinyl und β-Sulfatoethyl;
- Y²: hat eine der Bedeutungen von Y¹;
die Gruppen Y¹-SO₂- und -SO₂-Y² stehen bevorzugt in meta- oder para-Stellung zur Azogruppe bzw. zur Aminogruppe an den Benzolkern gebunden.

Im nachfolgenden können die Farbstoffe der allgemeinen Formeln (1) pauschal als "Farbstoffe (1)" und die Farbstoffe (2) pauschal als "Farbstoffe (2)" bezeichnet werden. Sie sind aus der europäischen Patentanmeldungs-Veröffentlichung Nr. 0 032 187 und aus der japanischen Patentanmeldungsbekanntmachung JP 580 55 189 bekannt oder können analog den dort beschriebenen Verfahrensweisen hergestellt werden.

In den obigen allgemeinen Formeln sowie in den nachfolgenden allgemeinen Formeln können die einzelnen Formelglieder, sowohl verschiedener als auch gleicher Bezeichnung, im Rahmen ihrer Bedeutung zueinander gleiche oder voneinander verschiedene Bedeutungen haben.

Die Gruppen "Sulfo", "Thiosulfato", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO₃M, Thiosulfatogruppen Gruppen entsprechend der allgemeinen Formel -S-SO₃M, Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M , in welchen M die obengenannte Bedeutung besitzt.

Gruppen der allgemeinen Formeln (3a) und (3b) 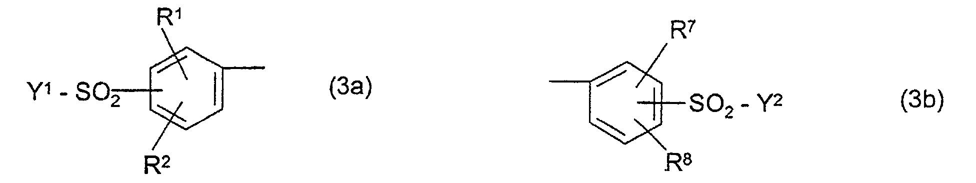 die in den Farbstoffen (1) bzw. Farbstoffen (2) enthalten sind, sind beispielsweise 3-(β-Sulfatoethylsulfonyl)-phenyl, 4-(β-Sulfatoethylsulfonyl)-phenyl, 2-Methyl-5-(β-sulfatoethylsulfonyl)-phenyl, 2-Methoxy-5-(β-sulfatoethylsulfonyl)-phenyl, 4-Methyl-3-(β-sulfatoethylsulfonyl)-phenyl, 2,5-Dimethyl-4-(β-sulfatoethylsulfonyl)-phenyl, 2,6-Dimethyl-4-(β-sulfatoethylsulfonyl)-phenyl, 2-Methoxy-4-(β-sulfatoethylsulfonyl)-phenyl, 4-Methoxy-5-(β-sulfatoethylsulfonyl)-phenyl, 2-Methoxy-5-methyl-4-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl, 2-Carboxy-5-(β-sulfatoethylsulfonyl)-phenyl, 2-Sulfo-5-(β-sulfatoethylsulfonyl)-phenyl und 2-Sulfo-4-(β-sulfatoethylsulfonyl)-phenyl, hiervon insbesondere 3- oder 4-(β-Sulfatoethylsulfonyl)-phenyl, sowie deren Derivate, in welchen die β-Sulfatoethylsulfonyl-Gruppe durch die Vinylsulfonyloder β-Thiosulfato-ethylsulfonyl- oder β-Chlorethylsulfonyl-Gruppe ausgetauscht ist.

Gruppen entsprechend den allgemeinen Formeln -G(R³,R⁴,R^{A}) und (R^{B},R⁵,R⁶)-D-, die in den Farbstoffen (1) bzw. Farbstoffen (2) enthalten sind, sind beispielsweise 2-Sulfo-phenyl, 3-Sulfo-phenyl, 4-Sulfo-phenyl, 2-Sulfo-4-methoxy-phenyl, 2-Sulfo-4-methyl-phenyl, 2,5-Disulfo-4-methoxy-phenyl, 2,5-Disulfo-4-methyl-phenyl, 2,5-Disulfo-phenyl, 2,4-Disulfo-phenyl, 2-Carboxyphenyl, 1-Sulfo-naphth-2-yl, 1,5-Disulfo-naphth-2-yl, 4,8-Disulfo-naphth-2-yl und 5,7-Disulfo-naphth-2-yl.

Von den erfindungsgemäßen Farbstoffmischungen sind solche mit Farbstoffen (1) bevorzugt, in welchen der Formelrest Y¹-SO₂- für Vinyl und insbesondere bevorzugt β-Sulfatoethylsulfonyl steht und in para-Stellung zur Azogruppe an den Phenylrest gebunden ist, R¹ und R² beide Wasserstoff bedeuten und der Rest -G(R³,R⁴,R^{A}) 2-Sulfo-phenyl, 3-Sulfo-phenyl, 4-Sulfophenyl oder 1-Sulfo-naphth-2-yl bedeutet.

Von den erfindungsgemäßen Farbstoffmischungen sind ebenfalls solche mit Farbstoffen (2) bevorzugt, in welchen der Formelrest (R^{B},R⁵,R⁶)-D- für 1,5-Disulfo-naphth-2-yl, 1-Sulfo-naphth-2-yl, 2-Sulfo-phenyl oder 2-Sulfo-4-methyl steht und die Gruppe der allgemeinen Formel (3b) 3- oder 4-Vinylsulfonyl-phenyl oder bevorzugt 3- oder 4-(β-Sulfatoethylsulfonyl)-phenyl bedeutet, weiterhin mit solchen Farbstoffen (2), in welchen die Diazokomponente (R^{B},R⁵,R⁶)-D- 2-Sulfo-phenyl bedeutet, R Ethyl ist und die Gruppe der allgemeinen Formel (3b) für 3-Vinylsulfonyl-phenyl oder bevorzugt 3-(β-Sulfatoethylsulfonyl)-phenyl steht, des weiteren erfindungsgemäße Farbstoffmischungen mit solchen Farbstoffen (2), in welchen die Diazokomponente 1,5-Disulfo-naphth-2-yl ist, R Wasserstoff bedeutet und die Gruppe der allgemeinen Formel (3b) 2-Methoxy-5-vinylsulfonyl-phenyl oder bevorzugt 2-Methoxy-5-(β-sulfatoethylsulfonyl)-phenyl ist.

Die Farbstoffe der allgemeinen Formel (1) können, insbesondere bei gleichem Chromophor, innerhalb der Bedeutung von Y¹ unterschiedliche faserreaktive Gruppen -SO₂-Y¹ besitzen (gleiches gilt auch für die Farbstoffe der allgemeinen Formel (2) bezüglich Y²). Insbesondere können die Farbstoffmischungen Farbstoffe gleichen Chromophors entsprechend den hier angesprochenen allgemeinen Formeln enthalten, in denen die faserreaktiven Gruppen -SO₂-Y¹ bzw. -SO₂-Y² zum einen Vinylsulfonylgruppen und zum anderen β-Chlorethylsulfonyl- oder β-Thiosulfatoethylsulfonyl- oder bevorzugt β-Sulfatoethylsulfonyl-Gruppen sind. Enthalten die Farbstoffgemische die jeweiligen Farbstoffkomponenten teilweise als Farbstoff mit der Vinylsulfonylgruppe, so liegt der Farbstoffanteil des jeweiligen Farbstoffes mit der Vinylsulfonylgruppe bis zu etwa 30 Mol-%, bezogen auf den jeweiligen Farbstoffchromophor, vor.

Die erfindungsgemäßen Farbstoffmischungen lassen sich in an und für sich üblicher Verfahrensweise herstellen, wie durch mechanisches Vermischen der Einzelfarbstoffe, sei es in Form von deren Farbstoffpulvern oder -granulaten oder deren Syntheselösung oder von wäßrigen Lösungen der Einzelfarbstoffe generell, welche noch übliche Hilfsmittel enthalten können.

Die erfindungsgemäßen Farbstoffmischungen können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, und geringe Mengen an Sikkativen, falls sie in flüssiger, wäßriger Lösung (einschließlich des Gehaltes von Verdickungsmitteln, wie sie bei Druckpasten üblich sind) vorliegen, auch Substanzen, die die Haltbarkeit dieser Präparationen gewährleisten, wie beispielsweise schimmelverhütende Mittel.

Im allgemeinen liegen die erfindungsgemäßen Farbstoffmischungen als Farbstoffpulver mit einem Gehalt von 10 bis 80 Gew.-%, bezogen auf das Farbstoffpulver bzw. die Präparation, an einem Elektrolytsalz, das auch als Stellmittel bezeichnet wird, vor. Diese Farbstoffpulver können zudem die erwähnten Puffersubstanzen in einer Gesamtmenge von bis zu 5 Gew.-%, bezogen auf das Farbstoffpulver enthalten. Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 10 Gew.-%, bevorzugt bis zu 2 Gew.-%, enthalten.

Die Abscheidung der auf chemischem Wege hergestellten erfindungsgemäßen Farbstoffmischungen aus deren Syntheselösung kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen oder Sprühtrocknung der Reaktionslösung, wobei dieser Reaktionslösung eine Puffersubstanz zugefügt werden kann.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese der Azoverbindungen anfallenden Lösungen nach deren Vermischen zu den erfindungsgemäßen Farbstoffmischungen, gegebenenfalls nach oder unter Zusatz einer Puffersubstanz, gegebenenfalls auch nach Konzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige-Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten, gegenüber den Einzelfarbstoffen verbesserten Farbausbeuten. Man färbt bevorzugt in wäßrigem Bad bei Temperaturen zwischen 40 und 105°C, gegebenenfalls bei einer Temperatur bis zu 130°C unter Druck, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.
Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittels sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Die erfindungsgemäßen Farbstoffmischungen zeichnen sich auf den Cellulosefasermaterialien bei Anwendung in den Färbe- und Druckverfahren durch eine höhe Fixierausbeute aus. Die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und sehr gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Coloirists 1972, 93-99, und 1975, 33-44) mit sehr guten Echtheitseigenschaften färben.

Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, klare, gelbstichig bis blaustichig rote Färbungen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der freien Säuren angegeben; im allgemeinen werden sie in Form ihrer Salze, vorzugsweise Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

### Beispiel 1

1000 Teile einer wäßrigen Lösung mit 164 Teilen des nachstehend angegebenen Farbstoffes der Formel (A-1), wie eine Syntheselösung dieses Farbstoffes, und 1000 Teile einer wäßrigen Lösung mit 175 Teilen des nachstehend angegebenen Farbstoffes der Formel (B-1), wie einer Syntheselösung dieses Farbstoffes 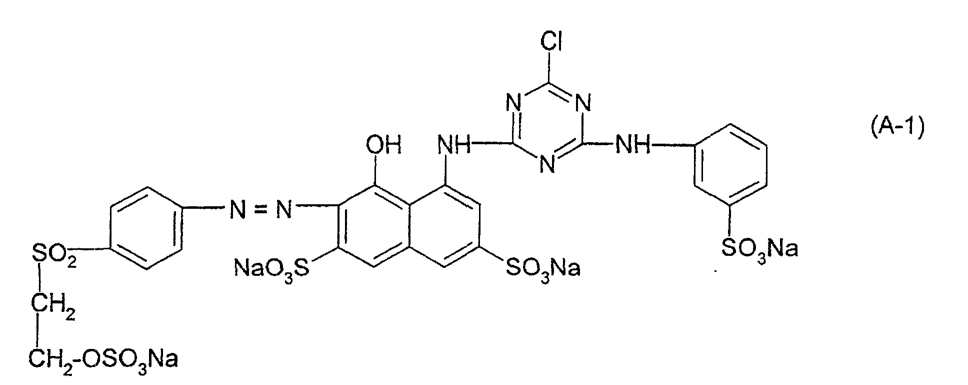 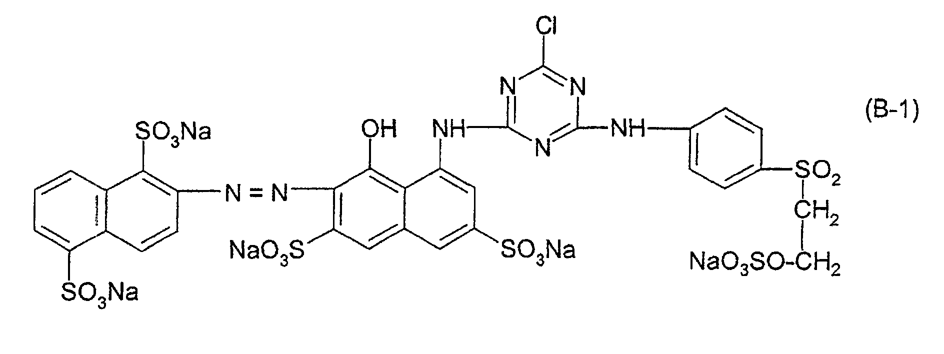 (mit M der obengenannten Bedeutung, bevorzugt Natrium) werden miteinander vermischt.
Man isoliert die erfindungsgemäße Farbstoffmischung in einem molaren Mischungsverhältnis des Farbstoffes (A-1) zu Farbstoff (B-1) von 50 : 50 aus der vereinigten Lösung in üblicher Weise, beispielsweise durch Sprühtrocknung der Farbstofflösung. Die erhaltene erfindungsgemäße, aus der Synthese stammende Elektrolytsalze, wie Natriumchlorid und Natriumsulfat, enthaltende Farbstoffmischung zeigt sehr gute färberische Eigenschaften und liefert beispielsweise auf cellulosischen Fasermaterialien, wie Baumwolle, oder Celluloseregeneratfasern in einem für faserreaktive Farbstoffe üblichen Auszieh-Färbeverfahren farbstarke und egale rote Färbungen.

### Beispiele 2 bis 13

In den nachfolgenden Tabellenbeispielen sind weitere erfindungsgemäße Farbstoffmischungen mit Farbstoffen beschrieben, deren Formeln (mit M der oben angegebenen Bedeutung) im Anschluß an die Tabelle angegeben sind. Die Mischungen besitzen sehr gute anwendungstechnische Eigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke rote Färbungen und Drucke mit guten Echtheitseigenschaften und einem guten Farbaufbau. In der Rubrik MV wird das molare Mischungsverhältnis der beiden Farbstoffe zueinander in Mol-% angegeben.

| Bsp. | Farbstoff (1) | Farbstoff (2) | MV von (1) : (2) |
|---|---|---|---|
| 2 | Formel (A-1) | Formel (B-2) | 60 : 40 |
| 3 | Formel (A-1) | Formel (B-3) | 50 : 50 |
| 4 | Formel (A-1) | Formel (B-4) | 40 : 60 |
| 5 | Formel (A-1) | Formel (B-5) | 60 : 40 |
| 6 | Formel (A-2) | Formel (B-6) | 65 : 35 |
| 7 | Formel (A-3) | Formel (B-7) | 50 : 50 |
| 8 | Formel (A-4) | Formel (B-8) | 45 : 55 |
| 9 | Formel (A-1) | Formel (B-9) | 53 : 47 |
| 10 | Formel (A-5) | Formel (B-1) | 50 : 50 |
| 11 | Formel (A-1) | Formel (B-10) | 50 : 50 |
| 12 | Formel (A-1) | Formel (B-11) | 49 : 51 |
| 13 | Formel (A-1) | Formel (B-12) | 48 : 52 |

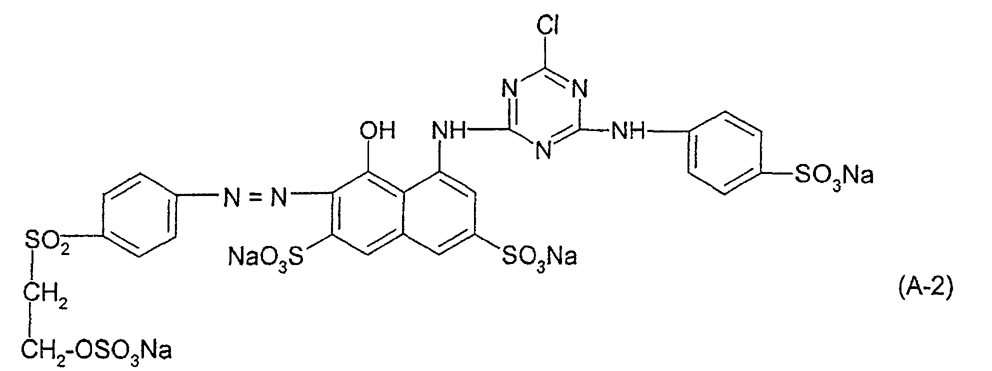

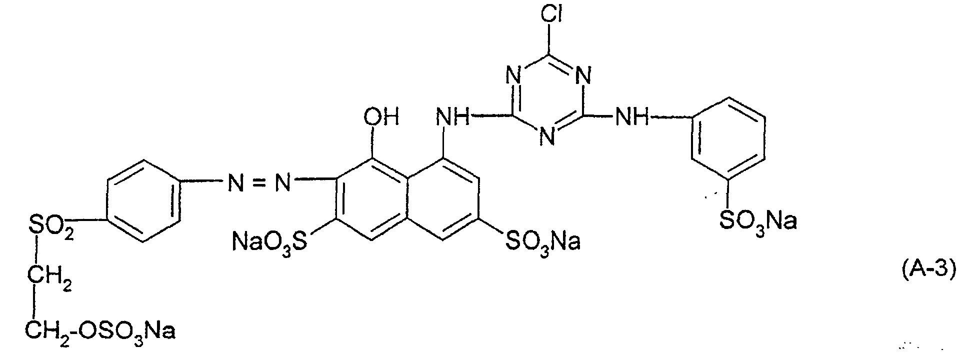

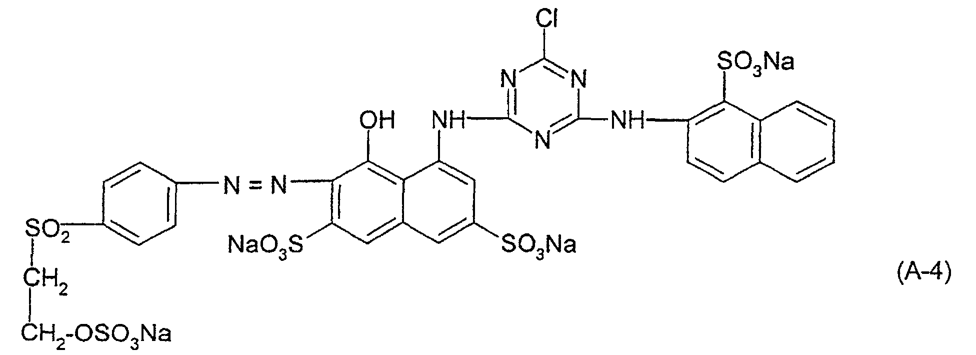

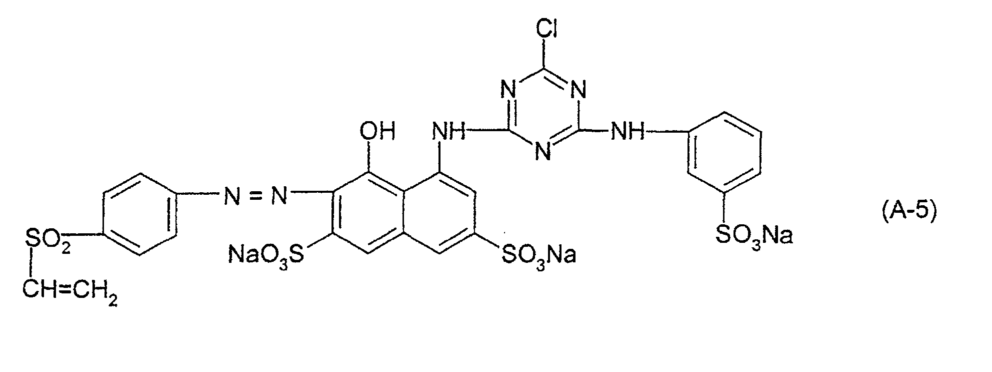

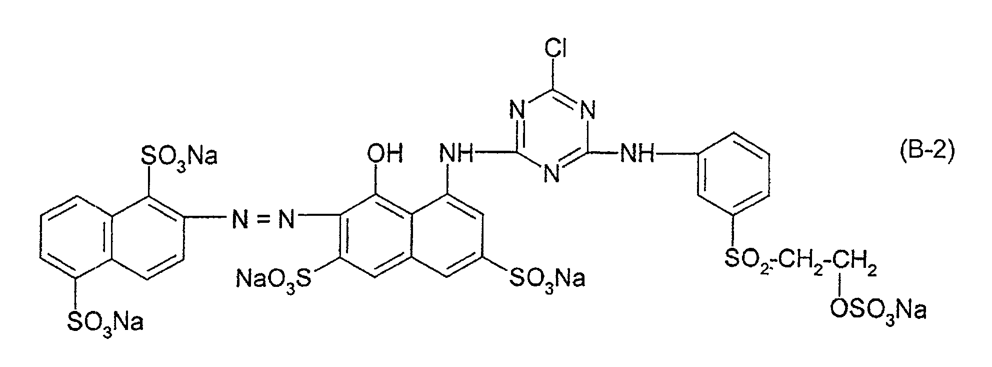

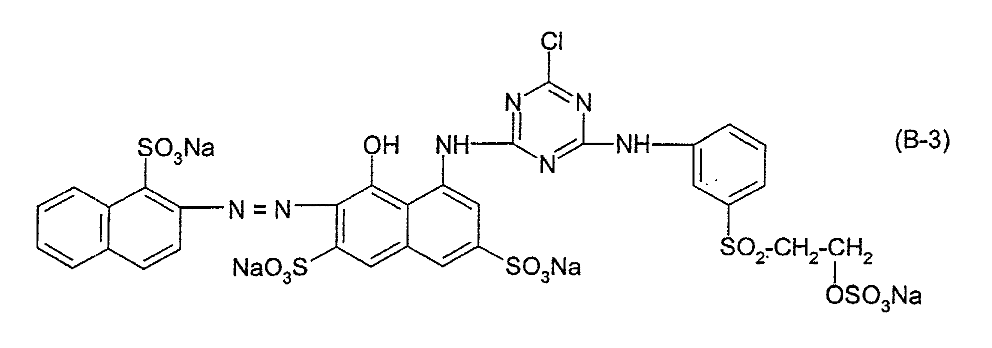

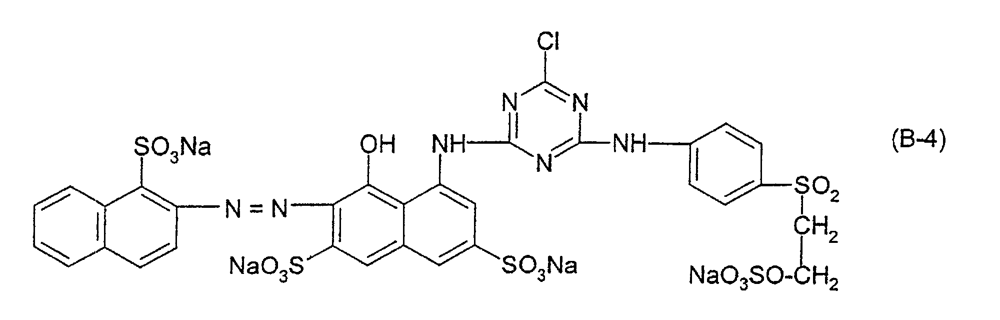

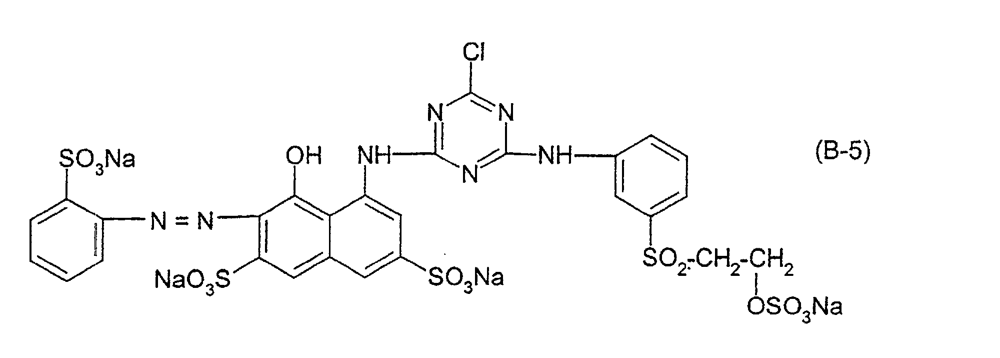

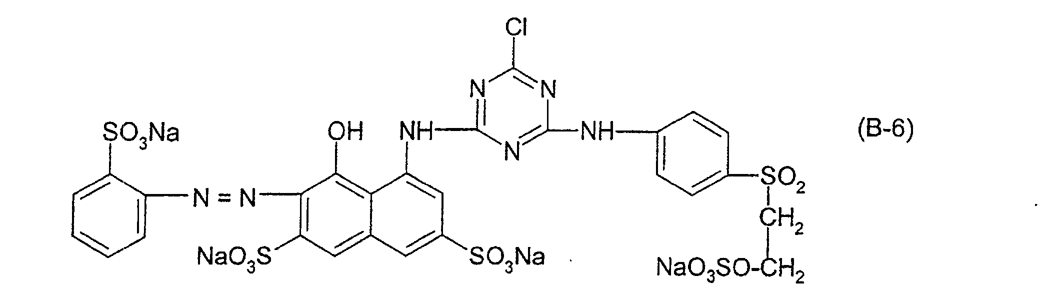

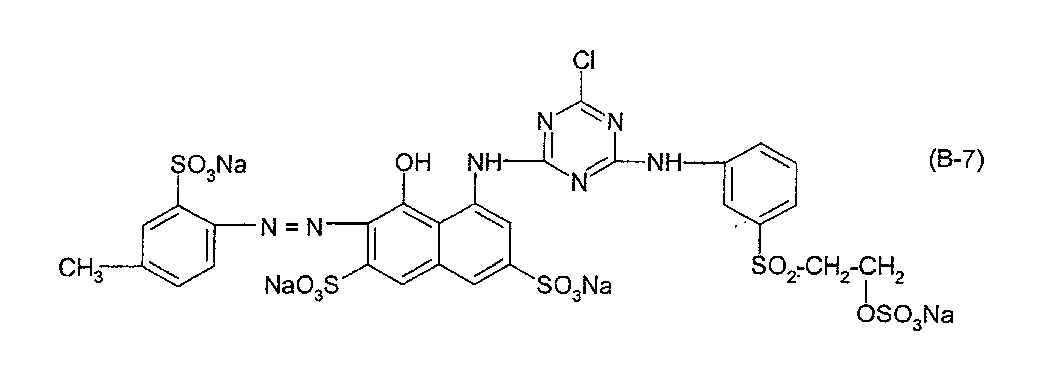

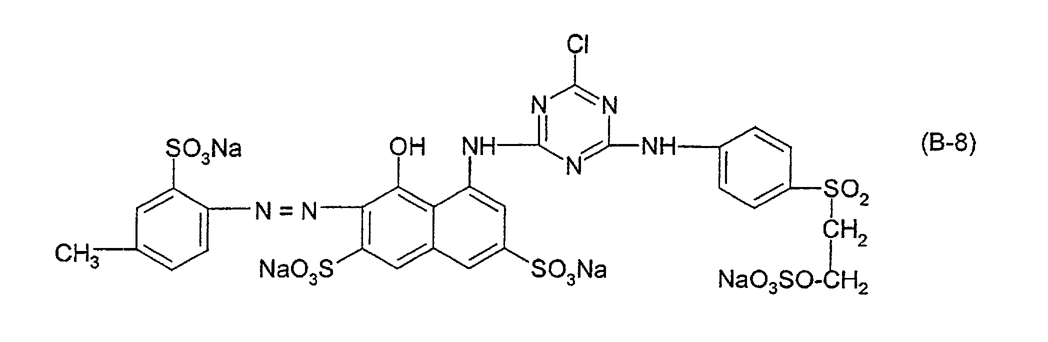

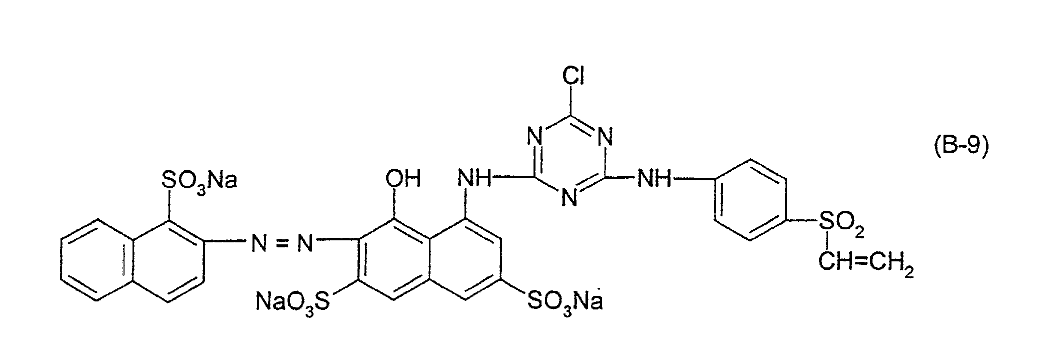

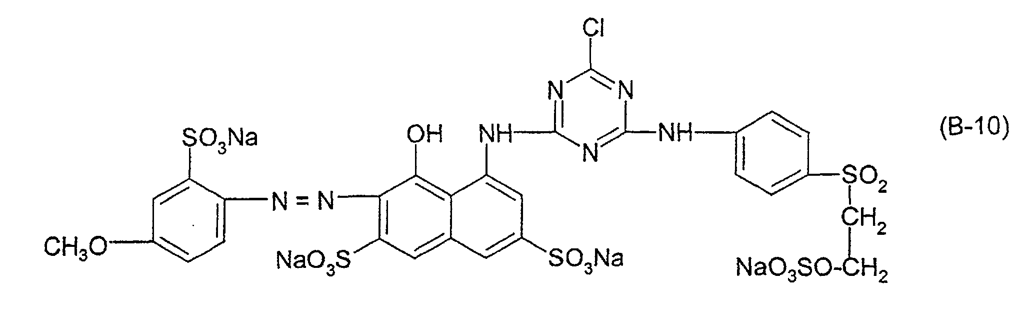

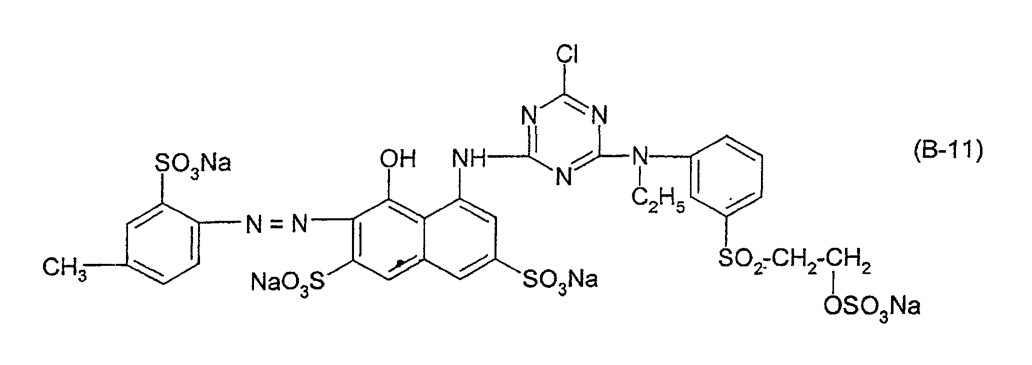

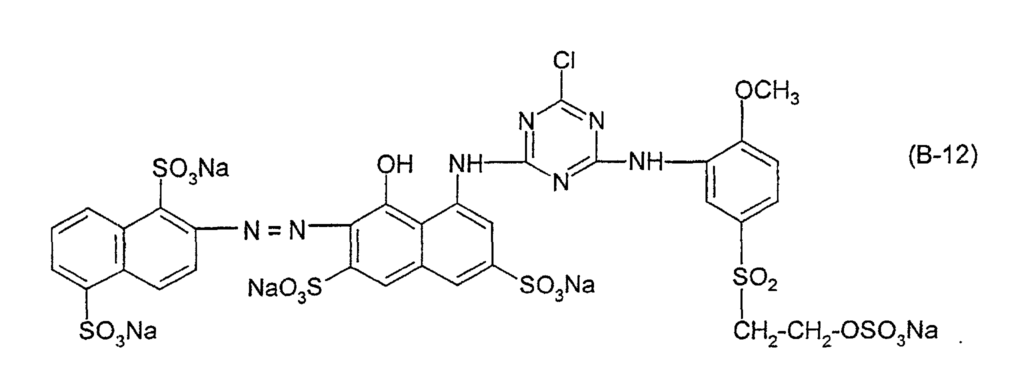

## Patentansprüche

1. Farbstoffmischung, die einen oder mehrere Farbstoffe der allgemeinen Formel (1) und einen oder mehrere Farbstoffe der allgemeinen Formel (2) in einem molaren Verhältnis der Farbstoffe (1) und (2) von 70 : 30 bis 30 : 70 enthalten 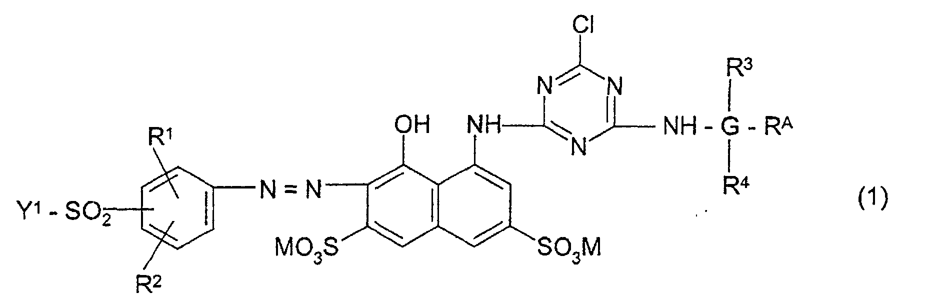 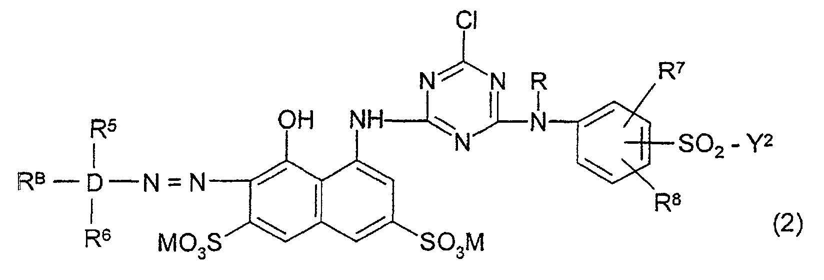 in welchen bedeuten:
M ist Wasserstoff, ein Alkalimetall oder das Äquivalent eines Erdalkalimetalls;
R¹ ist Wasserstoff, Alkyl von 1 bis 4 C-Atomen, Alkoxy von 1 bis 4 C-Atomen, Sulfo oder Carboxy;
R² ist Wasserstoff, Alkyl von 1 bis 4 C-Atomen oder Alkoxy von 1 bis 4 C-Atomen;
G ist der Rest des Benzols oder Naphthalins;
R³ ist im Falle, daß G für den Rest des Benzols steht, Wasserstoff, Alkyl von 1 bis 4 C-Atomen, Alkoxy von 1 bis 4 C-Atomen, Halogen, Sulfo oder Carboxy und ist Wasserstoff, Methyl, Sulfo oder Carboxy, falls G für den Rest des Naphthalins steht;
R⁴ ist im Falle, daß G für den Rest des Benzols steht, Wasserstoff, Alkyl von 1 bis 4 C-Atomen, Alkoxy von 1 bis 4 C-Atomen oder Sulfo und ist Wasserstoff oder Sulfo im Falle, daß G den Rest des Naphthalins bedeutet;
R^{A} ist Wasserstoff oder Sulfo;
D ist der Rest des Benzols oder Naphthalins;
R⁵ ist im Falle, daß D für den Rest des Benzols steht, Wasserstoff, Alkyl von 1 bis 4 C-Atomen, Alkoxy von 1 bis 4 C-Atomen, Halogen, Sulfo oder Carboxy und ist Wasserstoff, Methyl, Sulfo oder Carboxy, falls D für den Rest des Naphthalins steht;
R⁶ ist im Falle, daß D für den Rest des Benzols steht, Wasserstoff, Alkyl von 1 bis 4 C-Atomen, Alkoxy von 1 bis 4 C-Atomen oder Sulfo und ist Wasserstoff oder Sulfo im Falle, daß D den Rest des Naphthalins bedeutet;
R^{B} ist Wasserstoff oder Sulfo;
R⁷ ist Wasserstoff, Alkyl von 1 bis 4 C-Atomen, Alkoxy von 1 bis 4 C-Atomen, Sulfo oder Carboxy;
R⁸ ist Wasserstoff, Alkyl von 1 bis 4 C-Atomen oder Alkoxy von 1 bis 4 C-Atomen;
R ist Wasserstoff oder Alkyl von 1 bis 4 C-Atomen;
Y¹ ist Vinyl oder ist Ethyl, das in β-Stellung durch einen alkalisch eliminierbaren Substituenten substituiert ist;
Y² hat eine der Bedeutungen von Y¹.

2. Farbstoffmischung nach Anspruch 1, **dadurch gekennzeichnet, daß** R¹ Wasserstoff, Methyl oder Methoxy ist.

3. Farbstoffmischung nach Anspruch 1 oder 2, **dadurch gekennzeichnet, daß** R² Wasserstoff, Methyl oder Methoxy ist.

4. Farbstoffmischung nach Anspruch 1, **dadurch gekennzeichnet, daß** R¹ und R² beide Wasserstoff sind.

5. Farbstoffmischung nach mindestens einem der Ansprüche 1 bis 4, **dadurch gekennzeichnet, daß** R⁷ Wasserstoff, Methyl oder Methoxy ist.

6. Farbstoffmischung nach mindestens einem der Ansprüche 1 bis 5, **dadurch gekennzeichnet, daß** R⁸ Wasserstoff, Methyl oder Methoxy ist.

7. Farbstoffmischung nach mindestens einem der Ansprüche 1 bis 4, **dadurch gekennzeichnet, daß** R⁷ und R⁸ beide Wasserstoff sind.

8. Farbstoffmischung nach mindestens einem der Ansprüche 1 bis 7, **dadurch gekennzeichnet, daß** R³ Wasserstoff oder Sulfo, R⁴ Sulfo und R^{A} Wasserstoff bedeuten.

9. Farbstoffmischung nach mindestens einem der Ansprüche 1 bis 8, **dadurch gekennzeichnet, daß** R⁵ Wasserstoff oder Sulfo, R⁶ Sulfo und R^{B} Wasserstoff bedeuten.

10. Farbstoffmischung nach mindestens einem der Ansprüche 1 bis 9, **dadurch gekennzeichnet, daß** Y¹ Vinyl oder β-Sulfatoethyl ist.

11. Farbstoffmischung nach mindestens einem der Ansprüche 1 bis 10, **dadurch gekennzeichnet, daß** Y² Vinyl oder β-Sulfatoethyl ist.

12. Farbstoffmischung nach mindestens einem der Ansprüche 1 bis 11, **dadurch gekennzeichnet, daß** die Gruppe Y¹-SO₂ in meta- oder para-Stellung zur Azogruppe an den Benzolkern gebunden ist.

13. Farbstoffmischung nach mindestens einem der Ansprüche 1 bis 12, **dadurch gekennzeichnet, daß** die Gruppe -SO₂-Y² in meta- oder para-Stellung zur Aminogruppe an den Benzolkern gebunden ist.

14. Farbstoffmischung nach mindestens einem der Ansprüche 1 bis 13, **dadurch gekennzeichnet, daß** R Wasserstoff ist.

15. Farbstoffmischung nach mindestens einem der Ansprüche 1 bis 14, **dadurch gekennzeichnet, daß** der oder die Farbstoffe der allgemeinen Formel (1) und der oder die Farbstoffe der allgemeinen Formel (2) in einem molaren Verhältnis von 60 : 40 bis 40 : 60 vorliegen.

## Claims

1. A dye mixture comprising one or more dyes of the general formula (1) and one or more dyes of the general formula (2) in a molar ratio of the dyes (1) and (2) of 70 : 30 to 30 : 70 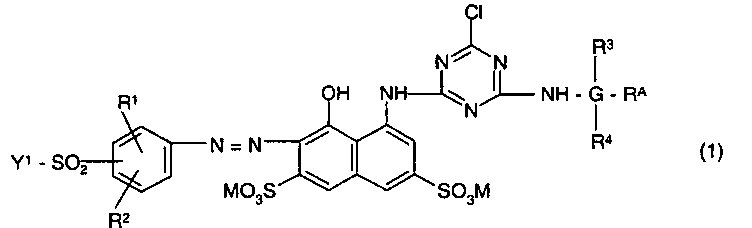 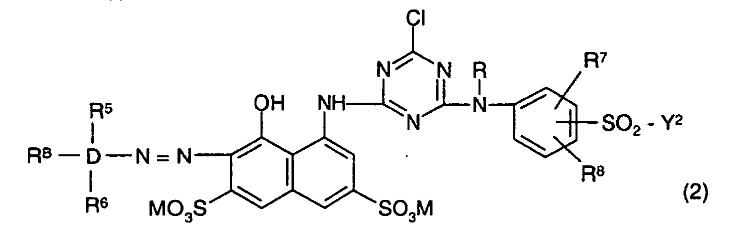 where:
M is hydrogen, an alkali metal or the equivalent of an alkaline earth metal;
R¹ is hydrogen, alkyl of 1 to 4 carbon atoms, alkoxy of 1 to 4 carbon atoms, sulfo or carboxyl;
R² is hydrogen, alkyl of 1 to 4 carbon atoms or alkoxy of 1 to 4 carbon atoms;
G is a radical of benzene or naphthalene;
R³ when G is a radical of benzene is hydrogen, alkyl of 1 to 4 carbon atoms, alkoxy of 1 to 4 carbon atoms, halogen, sulfo or carboxyl, and is hydrogen, methyl, sulfo or carboxyl when G is a radical of naphthalene;
R⁴ when G is a radical of benzene is hydrogen, alkyl of 1 to 4 carbon atoms, alkoxy of 1 to 4 carbon atoms or sulfo and is hydrogen or sulfo when G is a radical of naphthalene;
R^{A} is hydrogen or sulfo;
D is a radical of benzene or naphthalene;
R⁵ when D is a radical of benzene is hydrogen, alkyl of 1 to 4 carbon atoms, alkoxy of 1 to 4 carbon atoms, halogen, sulfo or carboxyl and is hydrogen, methyl, sulfo or carboxyl, when D is a radical of naphthalene;
R⁶ when D is a radical of benzene is hydrogen, alkyl of 1 to 4 carbon atoms, alkoxy of 1 to 4 carbon atoms or sulfo and is hydrogen or sulfo when D is a radical of naphthalene;
R^{B} is hydrogen or sulfo;
R⁷ is hydrogen, alkyl of 1 to 4 carbon atoms, alkoxy of 1 to 4 carbon atoms, sulfo or carboxyl;
R⁸ is hydrogen, alkyl of 1 to 4 carbon atoms or alkoxy of 1 to 4 carbon atoms;
R is hydrogen or alkyl of 1 to 4 carbon atoms;
Y¹ is vinyl or is ethyl which is substituted in the β-position by an alkali-eliminable substituent;
Y² has any of the meanings of Y¹.

2. A dye mixture as claimed in claim 1, wherein R¹ is hydrogen, methyl or methoxy.

3. A dye mixture as claimed in claim 1 or 2, wherein R² is hydrogen, methyl or methoxy.

4. A dye mixture as claimed in claim 1, wherein R¹ and R² are both hydrogen.

5. A dye mixture as claimed in at least one of claims 1 to 4, wherein R⁷ is hydrogen, methyl or methoxy.

6. A dye mixture as claimed in at least one of claims 1 to 5, wherein R⁸ is hydrogen, methyl or methoxy.

7. A dye mixture as claimed in at least one of claims 1 to 4, wherein R⁷ and R⁸ are both hydrogen.

8. A dye mixture as claimed in at least one of claims 1 to 7, wherein R³ is hydrogen or sulfo, R⁴ is sulfo and R^{A} is hydrogen.

9. A dye mixture as claimed in at least one of claims 1 to 8, wherein R⁵ is hydrogen or sulfo, R⁶ is sulfo and R^{B} is hydrogen.

10. A dye mixture as claimed in at least one of claims 1 to 9, wherein Y¹ is vinyl or β-sulfatoethyl.

11. A dye mixture as claimed in at least one of claims 1 to 10, wherein Y² is vinyl or β-sulfatoethyl.

12. A dye mixture as claimed in at least one of claims 1 to 11, wherein the Y¹-SO₂ group is attached to the benzene nucleus in a position meta or para to the azo group.

13. A dye mixture as claimed in at least one of claims 1 to 12, wherein the -SO₂-Y² group is attached to the benzene nucleus in a position meta or para to the amino group.

14. A dye mixture as claimed in at least one of claims 1 to 13, wherein R is hydrogen.

15. A dye mixture as claimed in at least one of claims 1 to 14, wherein the dye or dyes of the general formula (1) and the dye or dyes of the general formula (2) are present in a molar ratio of 60 : 40 to 40 : 60.

## Revendications

1. Mélange de colorants contenant un ou plusieurs colorants de formule générale (1) et un ou plusieurs colorants de formule générale (2) en un rapport molaire des colorants (1) et (2) de 70:30 à 30:70 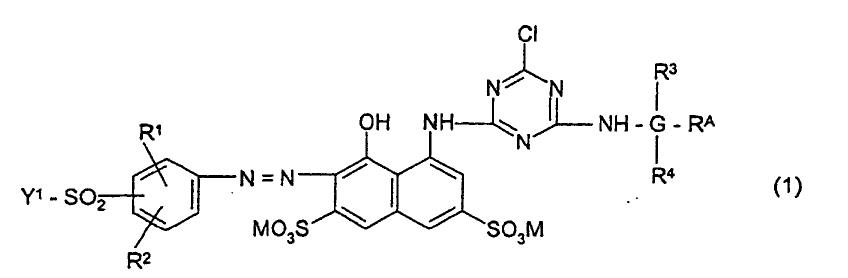 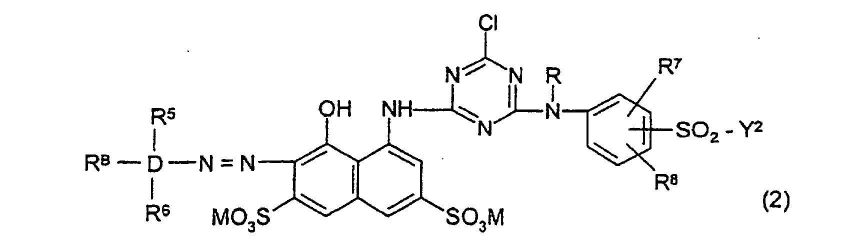 formules dans lesquelles
M est un atome d'hydrogène, un métal alcalin ou l'équivalent d'un métal alcalino-terreux ;
R¹ est un atome d'hydrogène, un groupe alkyle ayant de 1 à 4 atomes de carbone, un groupe alcoxy ayant de 1 à 4 atomes de carbone, le groupe sulfo ou carboxy ;
R² est un atome d'hydrogène, un groupe alkyle ayant de 1 à 4 atomes de carbone ou alcoxy ayant de 1 à 4 atomes de carbone ;
G est le reste du benzène ou du naphtalène ;
R³ dans le cas où G représente le reste du benzène, est un atome d'hydrogène ou d'halogène, un groupe alkyle ayant de 1 à 4 atomes de carbone, un groupe alcoxy ayant de 1 à 4 atomes de carbone, le groupe sulfo ou carboxy, et dans le cas où G représente le reste du naphtalène, est un atome d'hydrogène, le groupe méthyle, sulfo ou carboxy ;
R⁴ dans le cas où G représente le reste du benzène, est un atome d'hydrogène, un groupe alkyle ayant de 1 à 4 atomes de carbone, un groupe alcoxy ayant de 1 à 4 atomes de carbone ou le groupe sulfo, et dans le cas où G représente le reste du naphtalène, est un atome d'hydrogène ou le groupe sulfo ;
R^{A} est un atome d'hydrogène ou le groupe sulfo ;
D est le reste du benzène ou du naphtalène ;
R⁵ dans le cas où D représente le reste du benzène, est un atome d'hydrogène ou d'halogène, un groupe alkyle ayant de 1 à 4 atomes de carbone, un groupe alcoxy ayant de 1 à 4 atomes de carbone, le groupe sulfo ou carboxy, et dans le cas où D représente le reste du naphtalène, est un atome d'hydrogène ou le groupe méthyle, sulfo ou carboxy ;
R⁶ dans le cas où D représente le reste du benzène, est un atome d'hydrogène, un groupe alkyle ayant de 1 à 4 atomes de carbone, un groupe alcoxy ayant de 1 à 4 atomes de carbone ou le groupe sulfo, et dans le cas où D représente le reste du naphtalène, est un atome d'hydrogène ou le groupe sulfo ;
R^{B} est un atome d'hydrogène ou le groupe sulfo ;
R⁷ est un atome d'hydrogène, un groupe alkyle ayant de 1 à 4 atomes de carbone, un groupe alcoxy ayant de 1 à 4 atomes de carbone, le groupe sulfo ou carboxy ;
R⁸ est un atome d'hydrogène, un groupe alkyle ayant de 1 à 4 atomes de carbone ou un groupe alcoxy ayant de 1 à 4 atomes de carbone ;
R est un atome d'hydrogène ou un groupe alkyle ayant de 1 à 4 atomes de carbone ;
Y¹ est un groupe vinyle ou éthyle qui est substitué en position β par un substituant pouvant être éliminé dans des conditions alcalines ;
Y² a l'une des significations de Y¹.

2. Mélange de colorants selon la revendication 1, **caractérisé en ce que** R¹ est un atome d'hydrogène, le groupe méthyle ou méthoxy.

3. Mélange de colorants selon la revendication 1 ou 2, **caractérisé en ce que** R² est un atome d'hydrogène, le groupe méthyle ou méthoxy.

4. Mélange de colorants selon la revendication 1, **caractérisé en ce que** R¹ et R² sont l'un et l'autre des atomes d'hydrogène.

5. Mélange de colorants selon au moins l'une des revendications 1 à 4, **caractérisé en ce que** R⁷ est un atome d'hydrogène, le groupe méthyle ou méthoxy.

6. Mélange de colorants selon au moins l'une des revendications 1 à 5, **caractérisé en ce que** R⁸ est un atome d'hydrogène, le groupe méthyle ou méthoxy.

7. Mélange de colorants selon au moins l'une des revendications 1 à 4, **caractérisé en ce que** R⁷ et R⁸ sont l'un et l'autre des atomes d'hydrogène.

8. Mélange de colorants selon au moins l'une des revendications 1 à 7, **caractérisé en ce que** R³ représente un atome d'hydrogène ou le groupe sulfo, R⁴ représente le groupe sulfo et R^{A} représente un atome d'hydrogène.

9. Mélange de colorants selon au moins l'une des revendications 1 à 8, **caractérisé en ce que** R⁵ représente un atome d'hydrogène ou le groupe sulfo, R⁶ représente le groupe sulfo et R^{B} représente un atome d'hydrogène.

10. Mélange de colorants selon au moins l'une des revendications 1 à 9, **caractérisé en ce que** Y¹ est le groupe vinyle ou β-sulfatoéthyle.

11. Mélange de colorants selon au moins l'une des revendications 1 à 10, **caractérisé en ce que** Y² est le groupe vinyle ou β-sulfatoéthyle.

12. Mélange de colorants selon au moins l'une des revendications 1 à 11, **caractérisé en ce que** le groupe Y¹-SO₂ est lié au noyau benzénique en position méta ou para par rapport au groupe azo.

13. Mélange de colorants selon au moins l'une des revendications 1 à 12, **caractérisé en ce que** le groupe -SO₂-Y² est lié au noyau benzénique en position méta ou para par rapport au groupe amino.

14. Mélange de colorants selon au moins l'une des revendications 1 à 13, **caractérisé en ce que** R est un atome d'hydrogène.

15. Mélange de colorants selon au moins l'une des revendications 1 à 14, **caractérisé en ce que** le ou les colorants de formule générale (1) et le ou les colorants de formule générale (2) se trouvent en un rapport molaire de 60:40 à 40:60.
